# EUROPÄISCHE PATENTSCHRIFT

(11) **EP 1 625 391 B1**
(45) Veröffentlichungstag und Bekanntmachung des Hinweises auf die Patenterteilung: **06.06.2007**
(21) Anmeldenummer: 04729861.7
(22) Anmeldetag: 28.04.2004
(51) Int. Cl.: G01N 30/78

(54) **GASCHROMATOGRAPH MIT NACHGEORDNETEM MASSENSPEKTROMETER UND VERFAHREN ZUR GASCHROMATOGRAPHISCH-MASSENSPEKTROMETRISCHEN ANALYSE EINES STOFFGEMISCHS**
GAS CHROMATOGRAPH WITH A MASS SPECTROMETER SITUATED DOWN THEREFROM, AND METHOD FOR PERFORMING THE GAS CHROMATOGRAPHIC/MASS SPECTROMETRIC ANALYSIS OF A SUBSTANCE MIXTURE
CHROMATOGRAPHE EN PHASE GAZEUSE AVEC SPECTROMETRE DE MASSE MONTE EN AVAL ET PROCEDE D'ANALYSE D'UN MELANGE DE SUBSTANCES PAR CHROMATOGRAPHIE EN PHASE GAZEUSE ET SPECTROMETRIE DE MASSE

(30) Priorität: 28.04.2003 DE 10319130
(43) Veröffentlichungstag der Anmeldung: 15.02.2006
(73) Patentinhaber: SIEMENS AKTIENGESELLSCHAFT, 80333 München (DE)
(72) Erfinder: DIEDRICH, Frank, 76229 Karlsruhe (DE); MÜLLER, Friedhelm, 76351 Linkenheim-Hochstetten (DE)
(86) Internationale Anmeldenummer: PCT/EP2004/004483
(87) Internationale Veröffentlichungsnummer: WO 2004/097398

(56) Entgegenhaltungen:
- DE-A- 10 105 728
- US-A- 3 405 549
- US-A- 4 123 236
- US-A- 5 811 059

## Beschreibung

Die Erfindung betrifft einen Gaschromatographen mit nachgeordnetem Massenspektrometer nach dem Oberbegriff des Anspruchs 1.

Die Erfindung betrifft ferner ein Verfahren zur gaschromatographisch-massenspektrometrischen Analyse eines Stoffgemischs nach dem Oberbegriff des Anspruchs 5.

Ein derartiger Gaschromatograph und ein derartiges Verfahren sind aus der US 5811059 bekannt.

Bei der gaschromatographischen Analyse eines Stoffgemischs wird dieses zusammen mit einem Trägergas durch eine chromatographische Trenneinrichtung geleitet, in denen die Stoffe des Stoffgemischs aufgrund unterschiedlicher Retentionszeiten getrennt werden und daher nacheinander am Ausgang der Trenneinrichtung erscheinen. Für die Detektion der getrennten Stoffe stehen unterschiedliche Detektoren, wie z. B. Wärmeleitfähigkeitsdetektoren oder Flammenionisationsdetektoren, zur Verfügung. Die Verwendung eines Massenspektrometers als Detektor ermöglicht zusätzlich zu der Detektion der chromatographisch getrennten Stoffe auch noch die Differenzierung von Stoffen mit gleichen Retentionszeiten aber unterschiedlichen Massen. Da die massenspektrometrische Analyse von Stoffen im Vakuum erfolgt, ist die Anwesenheit des zusammen mit den getrennten Stoffen aus dem Gaschromatographen kommenden Trägergases unerwünscht. Das Massenspektrometer wird daher über ein steuerbares Einlassventil an den Ausgang der Trenneinrichtung angeschlossen, welches nur bedarfsweise, das heißt bei Ankunft der getrennten Stoffe, geöffnet wird, wobei im Übrigen das Trägergas ausgeschleust wird (DE 1598568). Es ist zwar möglich, so wie in den Figuren 3 und 4 der eingangs genannten US 5811059 gezeigt, in dem ausgeschleusten Trägergas die Ankunft des getrennten Stoffgemischs zu detektieren und in Abhängigkeit davon das Einlassventil zu öffnen, jedoch geht dabei ein Teil der getrennten Stoffe, nämlich die anfänglich mit dem Trägergas ausgeschleusten Stoffe, für die massenspektrometrische Analyse verloren. Die Steuerung der Zuführung von getrennten Stoffen zu dem Massenspektrometer kann daher nur relativ grob unter Einhaltung von Sicherheitszeiten erfolgen, so dass eine nicht unerhebliche Trägergasmenge in das Massenspektrometer gelangt und eine dementsprechend hohe Pumpleistung zur Erzeugung des notwendigen Vakuums erforderlich ist. Dies gilt auch für die in den Figuren 1 und 2 der US 5811059 gezeigten Varianten, bei denen das Trägergas ein Stück vor dem Einlassventil ausgeschleust und dort die Ankunft des getrennten Stoffgemischs detektiert wird.

Aus der DE 10105728 ist ein In-Line Detektor für Gaschromatographen bekannt.

Der Erfindung liegt daher die Aufgabe zugrunde, die massenspektrometrische Analyse von gaschromatographisch getrennten Stoffen zu optimieren.

Gemäß der Erfindung wird die Aufgabe durch den in Anspruch 1 angegebenen Gaschromatographen bzw. das in Anspruch 5 angegebene Verfahren gelöst.

Die am Ausgang der Trenneinrichtung erscheinenden getrennten Stoffe werden in-line und zerstörungsfrei detektiert, wobei nur diejenigen Stoffe an das Spektrometer weitergeleitet werden, die für eine weitere massenspektrometrische Analyse ausgewählt worden sind. Aufgrund der Geschwindigkeit des Träger gasstromes ist die Laufzeit der Stoffe von dem Detektor zu dem Einlassventil des Massenspektrometers bekannt, so dass die Stoffe sehr selektiv in das Massenspektrometer überführt werden können und daher die in das Massenspektrometer gelangende Trägergasmenge minimal ist. Dementsprechend gering kann daher die Pumpleistung zur Erzeugung des Vakuums in dem Massenspektrometer sein, so dass sehr kleine Pumpen, z. B. Ionengetterpumpen, zum Einsatz kommen können. Daraus resultieren Vorteile in Bezug auf Kosten, Lebensdauer, Wartungsbedarf und Stromaufnahme. Ferner beschränkt sich der Umfang der Messsignalauswertung in dem Massenspektrometer nur noch auf die ihm selektiv zugeführten Stoffe, so dass seine Elektronik und Software billiger und leistungsfähiger (schneller) ausgestaltet werden kann.

Stoffe, die nicht für die massenspektrometrische Analyse ausgewählt werden, können bei Bedarf dennoch durch den in-line Detektor und die nachgeordnete Auswerteeinrichtung analysiert werden.

Für den Detektor kommen nur Detektoren in Frage, die das Stoffgemisch nicht zerstören, also beispielsweise ein geeigneter Wärmeleitfähigkeitsdetektor, optischer Detektor oder mit akustischen Oberflächenwellen arbeitender Detektor. Um die von der Trenneinrichtung erbrachte Trennleistung nicht nachträglich zu beeinträchtigen, ist dabei der von dem Stoffgemisch durchströmte Messpfad des Detektors vorzugsweise in der Weise ausgebildet, dass seine Querschnittsabmessungen zumindest annähernd den Querschnittsabmessungen der Trenneinrichtung entsprechen.

Entsprechend einer bevorzugten Ausbildung des erfindungsgemäßen Gaschromatographen-Massenspektrometers besteht der Detektor aus einem Wärmeleitfähigkeitsdetektor mit in einer Brückenschaltung angeordneten Heizwiderständen, von denen zwei in den beiden unterschiedlichen Brückenhälften einander diagonal gegenüberliegende Heizwiderstände in dem Messpfad angeordnet sind; die beiden anderen Heizwiderstände liegen dann in einem beispielsweise von dem Trägergas durchströmten Referenzpfad.

Zur weiteren Erläuterung der Erfindung wird im Folgenden auf die Figuren der Zeichnung Bezug genommen; im Einzelnen zeigen
- Figur 1: ein Ausführungsbeispiel des erfindungsgemäßen Gaschromatographen-Massenspektrometers und
- Figur 2: ein Ausführungsbeispiel für den Detektor.

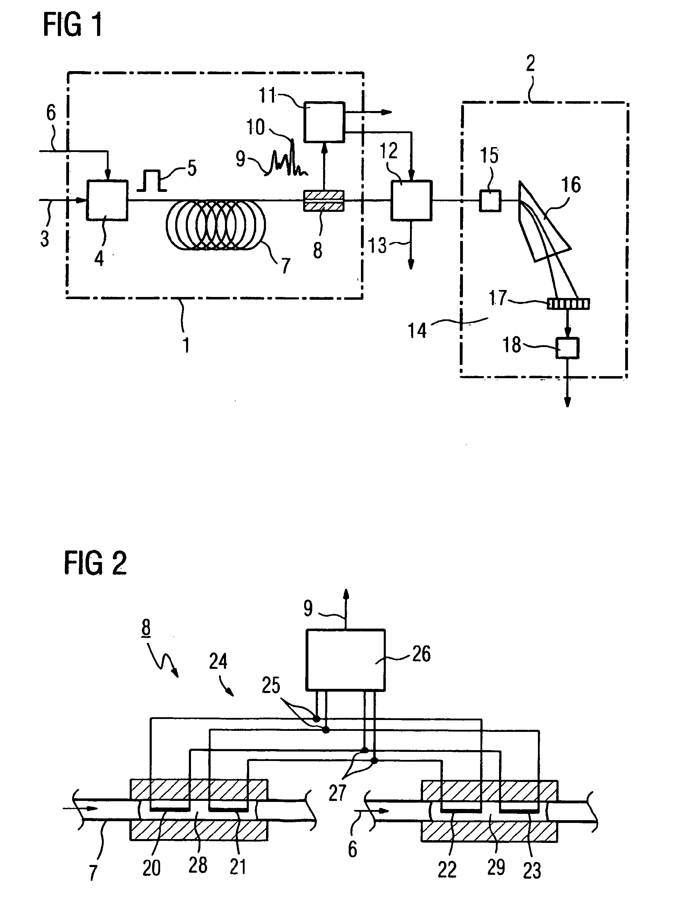

Figur 1 zeigt einen Gaschromatographen 1 mit einem nachgeordneten Massenspektrometer 2 zur Analyse eines Stoffgemischs (Probe) 3, das nach Entnahme aus einem technischen Prozess und Aufbereitung einer Dosiereinrichtung 4 zugeführt wird. Die Dosiereinrichtung 4 dient dazu, zu einem vorgegebenen Zeitpunkt eine vorgegebene Dosiermenge der Probe 3 in Form eines kurzen und scharf begrenzten Probenpfropfes 5 in einen Trägergasstrom 6 einzuschleusen und einer Trenneinrichtung 7 in Form einer Trennsäule oder Trennsäulenschaltung zuzuführen. Die Trenneinrichtung 7 trennt die in dem Probenpfropf 5 enthaltenen Stoffe entsprechend ihren Retentionszeiten, so dass die Stoffe am Ausgang der Trenneinrichtung 7 nacheinander erscheinen.

Am Ausgang der Trenneinrichtung 7 ist ein Detektor 8 zu Detektion der getrennten Stoffe angeordnet. Der Detektor 8 liefert ein Detektorsignal 9, das für jeden getrennten Stoff einen Peak 10 enthält, dessen Peakfläche zu der Stoffmenge proportional ist. In einer dem Detektor 8 nachgeordneten Auswerteeinrichtung 11 wird die Ankunft ausgewählter Stoffe anhand ihrer Peaks 10 ermittelt und in Abhängigkeit davon und von der Trägergasgeschwindigkeit ein Einlassventil 12 zwischen dem Detektor 8 und dem Massenspektrometer 2 derart gesteuert, dass dieses nur die ausgewählten Stoffe in das Massenspektrometer 2 einleitet und die anderen Stoffe sowie das Trägergas über ein Auslass 13 ausschleust.

Die in das Vakuum 14 des Massenspektrometers 2 gelangenden ausgewählten Stoffe werden in einer Ionenquelle 15 ionisiert, anschließend in einem Massenfilter 16 nach ihrem Masse/Ladungsverhältnis getrennt und schließlich mittels eines Detektor-Arrays 17 mit nachgeordneter Auswerteeinrichtung 18 nachgewiesen.

Figur 2 zeigt ein Beispiel für den in-line-Detektor 8, der hier als Wärmeleitfähigkeitsdetektor ausgebildet ist. Der Detektor 8 weist drahtförmige Heizwiderstände 20, 21, 22, 23 auf, die in einer Brückenschaltung 24 angeordnet sind, wobei die Brückenschaltung 24 an zwei einander gegenüberliegenden Schaltungspunkten 25 aus einer Detektorschaltung 26 mit einem Strom gespeist wird und die zwischen den beiden anderen gegenüberliegenden Schaltungspunkten 27 auftretende Spannung von der Detektorschaltung 26 zur Erzeugung des Detektorsignals erfasst wird. Die in der Brückenschaltung 24 einander diagonal gegenüberliegenden Heizwiderstände 20 und 21 sind zwischen der Trenneinrichtung 7 und dem Einlassventil 12 in einem Messpfad 28 des Detektors 8 angeordnet, während die beiden übrigen Heizwiderstände 22 und 23 in einem von dem Trägergas 6 durchströmten Referenzpfad 29 angeordnet sind. Der Messpfad 28 ist derart ausgebildet, dass seine inneren Querschnittsabmessungen denen der angeschlossenen Trenneinrichtung 7 entsprechen, so dass das durchströmende getrennte Stoffgemisch nicht gestört wird. Die Heizwiderstände 20, 21, 22, 23 und die Innenwände der Pfade 28, 29 bestehen aus Materialien, die sich gegenüber dem zu analysierenden Stoffgemisch bzw. dem Trägergas 6 inert verhalten, also beispielsweise aus Gold bzw. Siliziumdioxid (Quarz), so dass eine Veränderung des Stoffgemischs aufgrund chemischer Reaktionen ausgeschlossen ist.

## Patentansprüche

1. Gaschromatograph (1) mit einem nachgeordneten Massenspektrometer (2), das über ein steuerbares Einlassventil (12) an dem Ausgang einer Trenneinrichtung (7) des Gaschromatographen (1) angeschlossen ist, die die Stoffe eines mittels eines Trägergases (6) durch sie geleiteten Stoffgemischs (3) trennt, wobei zwischen dem Ausgang der Trenneinrichtung (7) und dem Einlassventil (12) ein die getrennten Stoffe zerstörungsfrei detektierender Detektor (8) angeordnet ist und dem Detektor eine Auswerteeinrichtung (11) nachgeordnet ist, die von dem Detektor (8) erzeugte Detektorsignale auswertet und in Abhängigkeit davon das Einlassventil (12) zur Einleitung vorgebbarer Stoffe in das Massenspektrometer (2) ansteuert, wobei die anderen Stoffe und das Trägergas (6) über einen Auslass (13) zwischen der Trenneinrichtung (7) und dem Massenspektrometer (2) ausgeschleust werden,
**dadurch gekennzeichnet, dass** der Detektor (8) als In-Line Detektor ausgebildet ist, dass der Auslass (13) Bestandteil des Einlassventils (12) ist und dass die Auswerteeinrichtung (11) dazu ausgebildet ist, das Einlassventil (12) zur Einleitung der vorgebbaren Stoffe in das Massenspektrometer (2) in zusätzlicher Abhängigkeit von der durch die Geschwindigkeit des Trägergasstromes gegebenen Laufzeit der Stoffe von dem Detektor (8) zu dem Einlassventil (12) zu steuern.

2. Gaschromatograph nach Anspruch 1, **dadurch gekennzeichnet, dass** der Detektor (8) einen von dem Stoffgemisch durchströmten Messpfad (28) aufweist, dessen Querschnittsabmessungen zumindest annähernd den Querschnittsabmessungen der Trenneinrichtung (7) entsprechen.

3. Gaschromatograph nach Anspruch 2, **dadurch gekennzeichnet, dass** der Detektor (8) ein Wärmeleitfähigkeitsdetektor ist.

4. Gaschromatograph nach Anspruch 3, **dadurch gekennzeichnet, dass** der Wärmeleitfähigkeitsdetektor (8) in einer Brückenschaltung angeordnete Heizwiderstände (20, 21, 22, 23) aufweist, von denen zwei in den beiden unterschiedlichen Brückenhälften einander diagonal gegenüberliegende Heizwiderständen (20, 21) in dem Messpfad (28) angeordnet sind.

5. Verfahren zur gaschromatographischen Analyse eines Stoffgemischs (3), welches zur Trennung der in ihm enthaltenen Stoffe mittels eines Trägergases (6) durch eine Trenneinrichtung (7) geleitet wird, an deren Ausgang die dort ankommenden getrennten Stoffe zur quantitativen Bestimmung über ein steuerbares Einlassventil (12) in ein Massenspektrometer (2) eingeleitet werden, wobei die getrennten Stoffe durch einen zwischen dem Ausgang der Trenneinrichtung (7) und dem Einlassventil (12) angeordneten Detektor (8) detektiert werden und in Abhängigkeit von der Detektion das Einlassventil (12) zur Einleitung vorgebbarer Stoffe in das Massenspektrometer (2) angesteuert wird, wobei die anderen Stoffe über einen Auslass (13) zwischen der Trenneinrichtung (7) und dem Massenspektrometer (2) ausgeschleust werden,
**dadurch gekennzeichnet, dass** die Stoffe zwischen dem Ausgang der Trenneinrichtung (7) und dem Einlassventil (12) in-line detektiert werden, dass das Einlassventil (12) die anderen Stoffe sowie das Trägergas (6) über einen Auslass 13 ausschleust und dass das Einlassventil (12) zur Einleitung der vorgebbaren Stoffe in das Massenspektrometer (2) in zusätzlicher Abhängigkeit von der durch die Geschwindigkeit des Trägergasstromes gegebenen Laufzeit der Stoffe von dem Detektor (8) zu dem Einlassventil (12) gesteuert wird.

## Claims

1. Gas chromatograph (1) with a downstream mass spectrometer (2), which is connected by means of a controllable inlet valve (12) to the outlet of a separating device (7) of the gas chromatograph (1), which separates the substances of a substance mixture (3) passed through it by means of a carrier gas (6), a detector (8) that detects the separated substances nondestructively being arranged between the outlet of the separating device (7) and the inlet valve (12) and there being arranged downstream of the detector an evaluation device (11), which evaluates detector signals produced by the detector (8) and, in dependence on them, activates the inlet valve (12) to introduce predeterminable substances into the mass spectrometer (2), the other substances and the carrier gas (6) being discharged via an outlet (13) between the separating device (7) and the mass spectrometer (2), **characterized in that** the detector (8) is formed as an in-line detector, **in that** the outlet (13) is a component part of the inlet valve (12) and **in that** the evaluation device (11) is formed so as to control the inlet valve (12) to introduce the predeterminable substances into the mass spectrometer (2) in additional dependence on the transit time of the substances, given by the velocity of the carrier gas stream, from the detector (8) to the inlet valve (12).

2. Gas chromatograph according to Claim 1, **characterized in that** the detector (8) has a measuring path (28) which is flowed through by the substance mixture and the cross-sectional dimensions of which correspond at least approximately to the cross-sectional dimensions of the separating device (7).

3. Gas chromatograph according to Claim 2, **characterized in that** the detector (8) is a thermal conductivity detector.

4. Gas chromatograph according to Claim 3, **characterized in that** the thermal conductivity detector (8) has heating resistors (20, 21, 22, 23) arranged in a bridge circuit, two of which heating resistors (20, 21), lying diagonally opposite each other in the two different halves of the bridge, are arranged in the measuring path (28).

5. Method for the gas-chromatographic analysis of a substance mixture (3), which, to separate the substances contained in it, is passed by means of a carrier gas (6) through a separating device (7), at the outlet of which the separated substances arriving there are introduced via a controllable inlet valve (12) into a mass spectrometer (2) for quantitative determination, the separated substances being detected by a detector (8) arranged between the outlet of the separating device (7) and the inlet valve (12) and, in dependence on the detection, the inlet valve (12) being activated to introduce predeterminable substances into the mass spectrometer (2), the other substances being discharged via an outlet (13) between the separating device (7) and the mass spectrometer (2), **characterized in that** the substances are detected in-line between the outlet of the separating device (7) and the inlet valve (12), **in that** the inlet valve (12) discharges the other substances and the carrier gas (6) via an outlet (13) and **in that** the inlet valve (12) is controlled to introduce the predeterminable substances into the mass spectrometer (2) in additional dependence on the transit time of the substances, given by the velocity of the carrier gas stream, from the detector (8) to the inlet valve (12).

## Revendications

1. Chromatographe (1) en phase gazeuse ayant un spectromètre (2) de masse qui est monté en aval et qui est raccordé par une vanne (12) d'entrée pouvant être commandée à la sortie d'un dispositif (7) de séparation du chromatographe (1) en phase gazeuse, qui sépare les substances d'un mélange (3) qui passe au moyen d'un gaz (6) porteur, un détecteur (8) détectant sans destruction les substances séparées étant monté entre la sortie du dispositif (7) de séparation et la vanne (12) d'entrée et un dispositif (11) d'exploitation étant monté en aval du détecteur et exploitant les signaux produits par le détecteur (8) et commandant en fonction de cela la vanne (12) d'entrée pour l'introduction de substances pouvant être prescrites dans le spectromètre (2) de masse, les autres substances et le gaz (6) porteur étant évacués par une sortie (13) entre le dispositif (7) de séparation et le spectromètre (2) de masse,
**caractérisé en ce que** le détecteur (8) est constitué sous la forme d'un détecteur en ligne **en ce que** la sortie (13) fait partie de la vanne (12) d'entrée et **en ce que** le dispositif (11) d'exploitation est constitué pour commander la vanne (12) d'entrée pour l'introduction des substances pouvant être prescrites dans le spectromètre (2) de masse en fonction supplémentairement du temps de parcours, donné par la vitesse du courant gaz porteur, du détecteur (8) à la vanne (12) d'entrée.

2. Chromatographe en phase gazeuse suivant la revendication 1, **caractérisé en ce que** le détecteur (8) a un trajet (28) de mesure dans lequel passe le mélange gazeux et dont les dimensions de la section transversale correspondent au moins à peu près aux dimensions de la section transversale du dispositif (7) de séparation.

3. Chromatographe en phase gazeuse suivant la revendication 2, **caractérisé en ce que** le détecteur (8) est un détecteur de conductibilité de la chaleur.

4. Chromatographe en phase gazeuse suivant la revendication 3, **caractérisé en ce que** le détecteur (8) de conductibilité de la chaleur a des résistances (20, 21 22, 23) de chauffage, qui sont disposées suivant un circuit en pont et dont deux résistances (20, 21) de chauffage opposées en diagonale l'une à l'autre dans les deux moitiés différentes du pont sont disposées dans le trajet (28) de mesure.

5. Procédé d'analyse par chromatographie en phase gazeuse d'un mélange (3) de substances, que l'on envoie pour la séparation des substances contenues au moyen d'un gaz (6) porteur dans un dispositif (7) de séparation à la sortie duquel les substances séparées qui arrivent sont envoyées, pour la détermination quantitative, dans un spectromètre (2) de masse par une vanne (12) d'entrée pouvant être commandée, les substances séparées étant détectées par un détecteur (8) disposé entre la sortie du dispositif (7) de séparation et la vanne (12) d'entrée et, en fonction de la détection, la vanne (12) d'entrée étant commandée pour envoyer des substances pouvant être prescrites au spectromètre (2) de masse, les autres substances étant évacuées par une sortie (13) comprise entre le dispositif (7) de séparation et le spectromètre (2) de masse,
**caractérisé en ce que** l'on détecte en ligne les substances entre la sortie du dispositif (7) de séparation et la vanne (12) d'entrée, **en ce que** la vanne (12) évacue les autres substances ainsi que le gaz (6) porteur par une sortie (13) et **en ce que** la vanne (12) d'entrée commandée pour l'introduction des substances pouvant être prescrites dans le spectromètre (2) de masse, en fonction supplémentairement du temps de parcours, donné par la vitesse du courant gaz porteur, du détecteur (8) à la vanne (12) d'entrée.
